# EUROPEAN PATENT APPLICATION

(11) **EP 3 267 078 A1**
(43) Date of publication of application: **10.01.2018**
(21) Application number: 17180130.1
(22) Date of filing: 06.07.2017
(51) Int. Cl.: F16J 15/3256

(54) **CASSETTE SEAL ASSEMBLY, IN PARTICULAR FOR VEHICLE AXLES**

(30) Priority: 06.07.2016 IT 201600070543
(71) Applicant: Rolf S.p.A., 20093 Cologno Monzese (IT)
(72) Inventor: DOSSENA, Luigi, 20125 Milano (IT); QUERZOLI, Stefano, 20093 Cologno Monzese (IT)
(74) Representative: Cernuzzi, Daniele

(57) **Abstract**

A seal assembly (1) for two mutually rotating mechanical members extends about an axis (A) and comprises a radially inner annular element (2) and a radially outer annular element (3), which can be coupled integrally and in a fluid-tight manner to respective mechanical members in relative rotation and cooperating in a fluid-tight manner with one another; the radially inner annular element (2) supports a first sealing member (6), which comprises a plurality of radial sealing lips (21-23), radially contacting a reinforcement body (5) of the radially outer annular element (3); the lip (21), which is the outermost of these radial sealing lips (21-23), directly contacts a radially inner surface (24), substantially cylindrical and parallel to the axis (A), of a sleeve portion (12) of the reinforcement body (5) of the radially outer annular element (3).

## Description

The present invention relates to a seal assembly of the so-called "cassette" type, particularly suitable to be used on mechanical members when needing to guarantee the separation between the inner lubricating fluid (typically oil) and an external environment, which is strongly aggressive due to the presence of mud, sand, water, etc. (as for example, but not only, for vehicles used in the agricultural field).

A cassette seal assembly is normally inserted between a rotating member and the respective rotation seat for sealing the seat in a fluid-tight manner.

For example, a typical application is on a vehicle axle for closing the seat housing the roller bearings of the axle, and generally contains a lubricant (grease or oil) necessary for lubricating the bearings. The bearings are integral to the seat and support the axle, if this latter is rotating, or they are rotating on the axle if this latter is instead integral to the frame of the vehicle, then supporting the wheel hubs.

A typical cassette seal assembly for this kind of use comprises a pair of annular elements, coupled integrally and in a fluid-tight manner to the axle and, respectively, to the seat, and equipped with respective elastomeric sealing rings supported by respective rigid reinforcement bodies, usually made of metal; each sealing ring has one or more annular sealing lips protruding from a reinforcement body and cooperating with the reinforcement body of the other annular element.

The seal assembly includes at least one main lip, loaded by a toroidal spring sliding on a sleeve portion of the reinforcement body mounted on the axle; and dust protection lips, facing the outside of the seat with respect to the main lip to prevent any external contaminant (water, dust, mud) from entering the seal assembly and thus protecting the main lip, which mainly performs the function of preventing any leakage of the lubricant (which lubricates the lip too).

Seal assemblies of the above type are generally satisfactory, but still have room for improvement, in particular in terms of efficiency, reliability and versatility.

The object of the present invention is therefore to provide an improved cassette seal assembly with respect to the known ones.

The present invention therefore relates to a cassette seal assembly as essentially defined in the appended claim 1 and, in its additional features, in the dependent claims. The seal assembly of the invention is particularly effective in ensuring the separation between the inner lubricant (oil) and the outer environment, even when this latter is highly aggressive due to the presence of mud, sand, water, etc.

The seal assembly of the invention mainly differs from the prior art solutions for the shape of the sealing members and, in particular, of the sealing member supported by the radially inner annular element (mainly working as a "dust protection"). In accordance with the invention, the sealing member supported by the radially inner annular element has the outermost lip (i.e. the first lip toward the outside of the seal assembly) which slidingly cooperates directly with a sleeve portion of the radially outer annular element, and precisely with the same surface on which also a second sealing lip acts.

The main advantages achieved by the invention are the following:
- effective "sealing" effect of the seal assembly, thus getting rid of all those "blind" areas which can permanently collect and house impurities, which in turn are the main cause of deterioration of the components in use;
- effective "covering" effect: the lip A performs an additional centrifugation of the impurities, thus avoiding their stagnation near the vital areas of the seal assembly;
- versatility: the end portion of the outer annular element can be shaped (in particular, orientated) in various ways depending on the specific needs; in particular, the end portion can be equally folded in order to be: perpendicular to the rotation axis and extending toward the rotation axis (i.e. toward the inside of the seal assembly); perpendicular to the rotation axis and extending toward the outside of the seal assembly (in the opposite direction with respect to the rotation axis); parallel to the rotation axis;

- flexibility of use (large axial clearance): thanks to the special shape of the seal assembly of the invention, the two annular elements have an axial excursion significantly larger than the one normally provided by the known solutions, thus providing users with a greater flexibility of use;
- low friction: the lip A, thanks to its characteristics of sealing and centrifugation of the impurities, keeps the outside area cleaner, thus making inner labyrinth seals less critical and reducing friction;
- reduced stagnation of mud in the sealing area: the absence of hooks or blind areas prevents the natural stagnation of mud in the area immediately adjacent to the first lip A, with the advantage of maintaining the efficiency of the lip over time.
- cleaning ease: in the operations of cleaning and ordinary maintenance of the machines, the operators have easy access to the area of the lip A, to the full advantage of its efficiency over time.

Further characteristics and advantages of the present invention will become clear from the following description of a non-limiting embodiment with reference to the figures of the accompanying drawings, wherein:
- Figure 1 is a section view of a seal assembly according to the invention;
- Figures 2-3 show respective variations of the seal assembly of Figure 1;
- Figures 4-5 show respective configurations of use of the seal assembly of Figure 1.

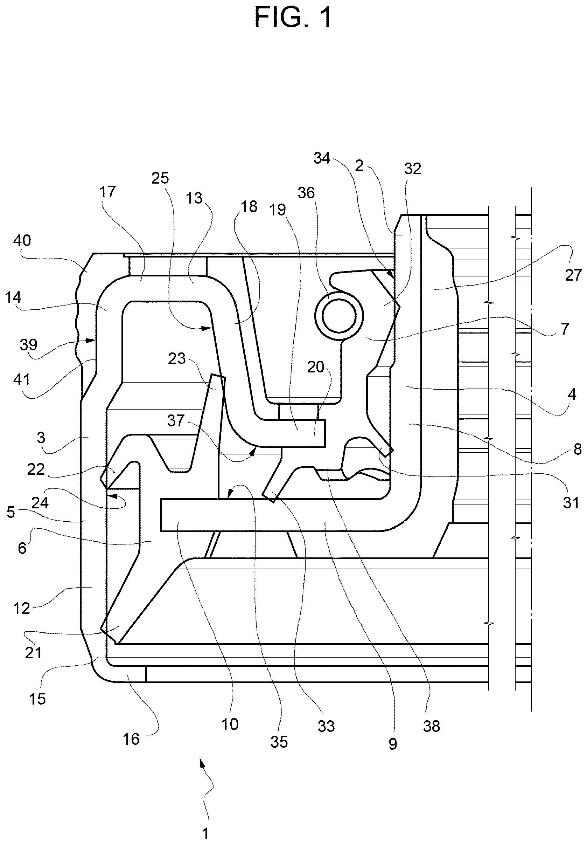

In Figure 1, the reference number 1 indicates as a whole a seal assembly 1 of the so-called cassette type, intended to be inserted between two mechanical members in relative rotation (not shown for simplicity's sake).

For example, the seal assembly 1 is suitable to be used between a vehicle axle and a seat crossed by the axle and housing the axle support bearings and in which there is a lubricating fluid necessary for their lubrication: the seal assembly 1, therefore, has the function of sealing said seat in a fluid-tight manner.

The seal assembly 1 extends about an axis A (coinciding, in use, with the rotation axis of the mechanical members between which the seal assembly 1 is arranged) and comprises a pair of coaxial annular elements 2, 3 coupled integrally and in a fluid-tight manner to respective mechanical members in relative rotation (e.g. an axle of a vehicle and a seat of the axle) and cooperating in a fluid-tight manner with one another.

In particular, the seal assembly 1 comprises a first radially inner annular element 2 and a second radially outer annular element 3.

The annular elements 2, 3 comprise respective reinforcement bodies 4, 5, substantially rigid and made e.g. of a metal material, and respective sealing elements 6, 7, integrally supported by the reinforcement bodies 4, 5 and made e.g. of an elastomeric material and joined to the respective reinforcement bodies 4, 5 by means of a vulcanization bonding process.

In particular, the reinforcement body 4 of the (radially inner) annular element 2 comprises a sleeve portion 8, which extends substantially parallel to the axis A and which can be coupled in a known way to the respective mechanical member (axle), and a radially outer flange portion 9, radially projecting from a longitudinal end of the sleeve portion 8 and terminating with a free end 10 facing the annular element 3.

The reinforcement body 5 of the (radially outer) annular element 3 includes a sleeve portion 12 to be coupled to the respective mechanical member (seat of the axle) and arranged substantially parallel to the axis A and coaxial and concentric with respect to the sleeve portion 8 of the other annular element 2; and a radially inner flange portion 13, radially projecting from a first longitudinal end 14 of the sleeve portion 12 toward the axis A and toward the annular element 2.

The sleeve portion 12 is partly facing the sleeve portion 8 of the annular element 2 and axially extends beyond the flange portion 9 of the annular element 2. In particular, a second longitudinal end 15, opposite to the end 14, of the sleeve portion 12 axially projects beyond the flange portion 9.

In the embodiment of Figure 1, the end 15 is bent at a right angle toward the axis A (and toward the annular element 2) and has an end portion 16 substantially perpendicular to the sleeve portion 12 and to the axis A; the end portion 16 radially extends toward the inside, i.e. in the same direction of the flange portion 13, and then toward the axis A and toward the annular element 2. Advantageously, the end 15 is flared and has a smaller thickness and the end portion 16 has a thickness smaller than the one of the sleeve portion 12.

The flange portion 13 has a substantially S-shaped section and comprises, starting from the end 14 to which it is joined, a first radially extending portion 17, an oblique intermediate portion 18 (inclined toward the sleeve portion 8 of the reinforcement body 4) and a second radially extending portion 19, which faces the flange portion 9 of the reinforcement body 4 of the annular element 2 and terminates with a free end 20, facing the sleeve portion 8 of the reinforcement body 4, of the flange portion 13.

The sealing member 6 projects from the annular element 2 to cooperate in a sliding manner with the annular element 3. In particular, the sealing member 6 projects from the free end 10 of the flange portion 9 and comprises: a pair of annular radial sealing lips 21, 22 facing the sleeve portion 12 of the annular element 3; and a radial sealing third lip 23, opposite to the lips 21, 22 and facing the flange portion 13 of the annular element 3.

The pair of lips 21, 22 and the third lip 23 axially extend in opposite directions and precisely: the lips 21, 22 extend toward the free end 10, whereas the lip 23 extends toward the flange portion 13.

The pair of lips 21, 22 and the third lip 23 face and contact respective radially opposite and facing surfaces 24, 25 of the annular element 3. In particular, the lips 21, 22 radially cooperate, i.e. are in radial contact with a substantially cylindrical radially inner surface 24 of the sleeve portion 12; whereas the lip 23 radially cooperates, i.e. is in radial contact with a substantially frustoconical radially outer surface 25 of the oblique portion 18 of the flange portion 13.

The lips 21, 22 are axially spaced from one another and are inclined with respect to the axis A; the lips 21, 22 are both inclined in the same direction with respect to the axis A and precisely toward the longitudinal end 15 of the sleeve portion 12.

All the lips 21, 22, 23 are shaped so as to cooperate in a sliding and fluid-tight manner by a radial interference with the respective surfaces 24, 25, against which the lips 21, 22, 23 are kept thanks to a radial deformation occurring during the assembly (Figure 1 shows the undeformed configuration of the lips 21, 22, 23).

The sealing member 6 preferably extends to form on a radially inner lateral surface of the sleeve portion 8 a coating layer 27, which serves to fasten the annular element 2 to the respective mechanical member: the sleeve portion 8 is fitted, in use, on the respective mechanical member by interposing the coating layer 27.

The sealing member 7 extends from the annular element 3 to cooperate in a sliding manner with the annular element 2. In particular, the sealing member 7 extends from the free end 20 of the flange portion 13 toward the sleeve portion 8 of the annular element 2.

The sealing member 7 comprises a pair of annular radial sealing lips 31, 32, facing the sleeve portion 8 of the annular element 2 and in contact with the sleeve portion 8; and an axial sealing lip 33, which contacts the flange portion 9 of the annular element 2.

The pair of radial sealing lips 31, 32 and the axial sealing lip 33 contact substantially perpendicular respective surfaces 34, 35 of the annular element 2.

In particular, the lips 31, 32 radially cooperate, i.e. are in radial contact, with a substantially cylindrical radially outer surface 34 of the sleeve portion 8; while the lip 33 axially cooperates, i.e. is in axial contact, with an annular surface 35, substantially perpendicular to the axis A, of the flange portion 9.

The lips 31, 32 are axially spaced from one another. The lip 31, which is closer to the flange portion 9 and mainly has a "dust protection" function, is coupled with a radial interference predetermined at assembly (its undeformed configuration being the one shown in Figure 1) to the sleeve portion 8. The lip 32, which is the furthest from the flange portion 9 of the other lip 31 and mainly has a sealing function, has a substantially V-shaped radial cross-section and is pressed against the sleeve portion 8 thanks to a radial interference predetermined at assembly (its undeformed configuration being the one shown in Figure 1), as well as to a toroidal spring 36.

The lip 33 extends from a substantially annular surface 37 perpendicular to the axis A of the flange portion 13 of the annular element 3 and contacts the surface 35 of the flange portion 9.

The lip 33 is then arranged between the opposite surfaces 35, 37, substantially perpendicular to the axis A and facing and parallel to one another, of the annular elements 2, 3 and more precisely of the respective flange portions 9, 13.

The lip 33 is shaped to cooperate in a sliding and fluid-tight manner with an axial interference with the surface 35, against which the lip 33 is kept thanks to an axial deformation at assembly (Figure 1 shows the undeformed configuration of the lip 33).

Moreover, the sealing member 7 optionally comprises an annular projection 38, arranged between the lip 31 and the lip 33; the projection 38 axially extends toward the surface 35 of the flange portion 9 and is axially spaced therefrom (i.e. it does not contact the surface 35). Advantageously, as shown in Figure 1, the projection 38 has a corrugated profile about the axis A.

The sealing member 7 can extend, as shown in Figure 1, over a radially outer lateral surface 39 of the sleeve portion 12 of the reinforcement body 5, thus forming an insert 40 to be coupled with a radial interference to the mechanical member on which the annular element 3 is mounted. Preferably, as shown in Figure 1, the insert 40 is housed in a recess 41 formed on the surface 39.

If, as in the example here referred to, the seal assembly 1 is used for fluid-tight sealing a seat of a vehicle axle, the seal assembly 1 is advantageously, though not necessarily, mounted so that the sealing member 7, supported by the annular element 3, is arranged toward the inside of the housing, namely on the side of a lubricating fluid contained inside said seat (which can therefore also lubricate the lip 32); the sealing member 6, supported by the annular element 2, is arranged out of the seat of the axle closed by the seal assembly 1, in direct contact with the external agents, and the lips 21, 22 face the outside of this seat.

The lip 32 forms the main sealing lip of the seal assembly 1 as it mainly prevents any leakage of the lubricant (which also lubricates the lip) from its seat; the lips 31, 33 of the sealing member 7, as well as the lips 21, 22, 23 of the sealing member 6, are essentially dust protection lips, mainly intended to prevent any external contaminant (water, dust, mud) from entering the seal assembly 1 to protect the lip 32.

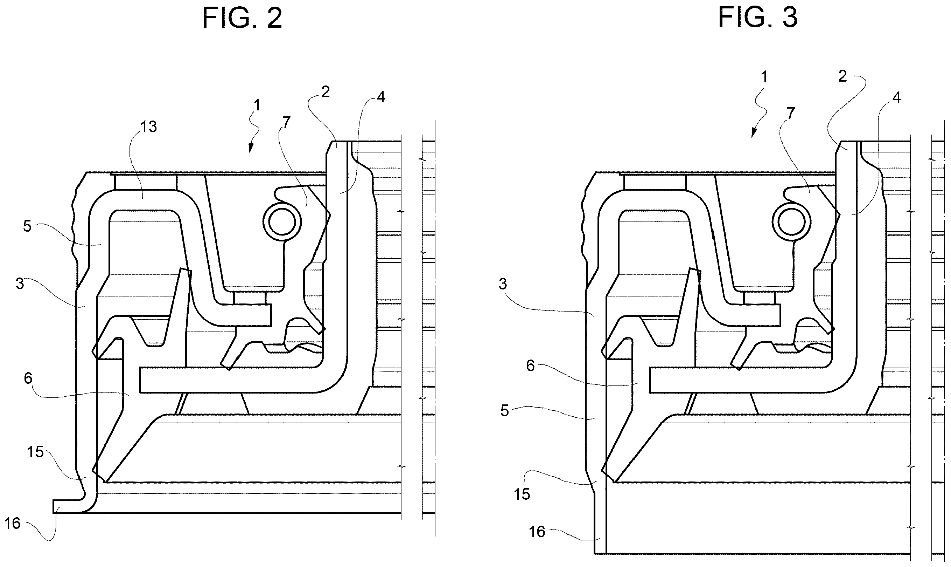

Figures 2-3, in which any detail similar or identical to those already described is indicated with the same reference number, show the versatility of the seal assembly 1 of the invention. In fact, the end portion 16 is designed to take different operating positions, being joined to the sleeve portion 12 by the end 15 that is flared and having a thickness smaller than the one of the sleeve portion 12.

In the variant of Figure 2, the end portion 16 is still perpendicular to the axis A and to the sleeve portion 12, as in the embodiment of Figure 1, but the end 15 is bent at a right angle in the opposite direction and therefore the end portion 16 extends radially outward, in the direction opposite to the flange portion 13.

In the variant of Figure 3, the end portion 16 is substantially parallel to the axis A and the end 15 is not bent, but is substantially rectilinear.

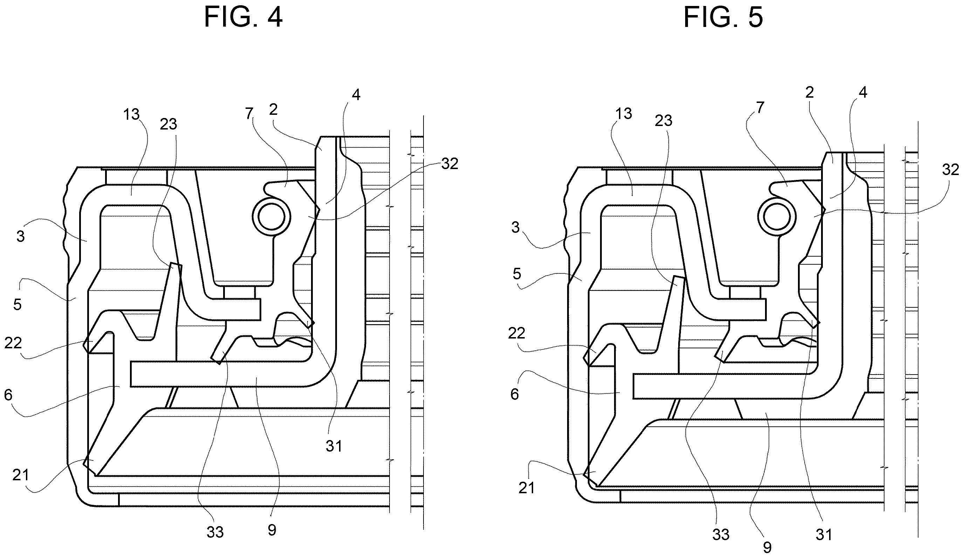

Figures 4 and 5 further show the flexibility of use of the seal assembly 1 of the invention.

In fact, the seal assembly 1 allows a large axial excursion to the annular elements 2, 3, which may be mounted in a plurality of mutual positions comprised between the two extreme configurations of use, shown respectively in Figure 4 (configuration of use completely closed, minimum axial distance between the annular elements 2, 3 and in particular between their respective flange portions 9, 13) and in Figure 5 (configuration of use completely open, maximum axial distance, in particular between the flange portions 9, 13 of the annular elements 2, 3).

Finally, it is clear that the seal assembly here described and shown can be subjected to further modifications and variations that do not depart from the scope of the accompanying claims.

## Claims

1. Seal assembly (1) for two mutually rotating mechanical members, e.g. an axle of a vehicle and a respective seat of the axle, extending about an axis (A) and comprising a radially inner annular element (2) and a radially outer annular element (3), which can be coupled integrally and in a fluid-tight manner to respective mechanical members and cooperate in a fluid-tight manner with one another; the radially inner annular element (2) comprising a first substantially rigid reinforcement body (4) and a first sealing member (6), integrally supported by the first reinforcement body (4) and made of an elastomeric material; the radially outer annular element (3) comprising a second substantially rigid reinforcement body (5) and a second sealing member (7), integrally supported by the second reinforcement body (5) and made of an elastomeric material; said reinforcement bodies (4, 5) comprising respective coaxial and concentric sleeve portions (8, 12), which extend substantially parallel to the axis (A) and can be coupled to respective mechanical members, and respective opposite flange portions (9, 13), radially projecting from respective longitudinal ends of the sleeve portions (8, 12); the seal assembly being **characterized in that** the first sealing member (6), supported by the radially inner annular element (2), comprises a plurality of radial sealing lips (21-23) which radially contact the second reinforcement body (5); a first lip (21), which is the outermost of said radial sealing lips (21-23), i.e. is positioned more externally than the other radial sealing lips toward the outside of the seal assembly (1), directly contacts a radially inner surface (24), substantially cylindrical and parallel to the axis (A), of the sleeve portion (12) of the second reinforcement body (5) of the radially outer annular element (3); and said surface (24) is contacted also by a second lip (22) of said radial sealing lips (21-23), the second lip (22) being positioned internally with respect to the first lip (21); and the first and the second lips (21, 22) contact said surface (24) at the same distance from the axis (A).

2. A seal assembly according to claim 1, wherein the first sealing member (6), supported by the radially inner annular element (2), has only a pair of radial sealing lips (21, 22) cooperating with the sleeve portion (12) of the second reinforcement body (5) of the radially outer annular element (3), formed by said first and second lips (21, 22) both cooperating with said radially inner surface (24) of said sleeve portion (12); and a third radial sealing lip (23), opposite to said first and second lips (21, 22) and axially extending in the opposite direction with respect to said first and second lips (21, 22).

3. A seal assembly according to claim 2, wherein said pair of lips (21, 22) and the third lip (23) face and contact respective radially opposite surfaces (24, 25) of the radially outer annular element (3).

4. A seal assembly according to claim 2 or 3, wherein the third lip (23) is in radial contact with a substantially frustoconical radially outer surface (25) of the flange portion (13) of the second reinforcement body (5) of the radially outer annular element (3).

5. A seal assembly according to any one of the preceding claims, wherein the reinforcement bodies (4, 5) consist of respective monolithic bodies made of a single metal material, in particular of metal sheet.

6. A seal assembly according to any one of the preceding claims, wherein the second sealing member (7) comprises: a second pair of radial sealing lips (31, 32), which contact the sleeve portion (8) of the first reinforcement body (4) of the radially inner annular element (2); and an axial sealing lip (33), which contacts the flange portion (9) of the first reinforcement body (4) of the radially inner annular element (2).

7. A seal assembly according to claim 6, wherein the second pair of radial sealing lips (31, 32) and the axial sealing lip (33) contact substantially perpendicular respective surfaces (34, 35) of the radially inner annular element (2).

8. A seal assembly according to claim 6 or 7, wherein the second pair of radial sealing lips (31, 32) is in radial contact with a substantially cylindrical radially outer surface (34) of the sleeve portion (8) of the first reinforcement body (4) of the radially inner annular element (2); whereas the axial sealing lip (33) is in axial contact with an annular surface (35), substantially perpendicular to the axis (A), of the flange portion (9) of the first reinforcement body (4) of the radially inner annular element (2).

9. A seal assembly according to any one of claims 6 to 8, wherein the axial sealing lip (33) is positioned between opposite surfaces (34, 37), substantially perpendicular to the axis (A) and facing and parallel to each other, of the annular elements (2, 3) and precisely of the respective flange portions (9, 13).

10. A seal assembly according to any one of the preceding claims, wherein the sleeve portion (12) of the second reinforcement body (5) of the radially outer annular element (3) comprises an end portion (16) positioned at a longitudinal end (15), opposite to the respective flange portion (13), of the second reinforcement body (5); said end portion (16) being configured for taking any one of the operating positions in which: the end portion (16) is substantially perpendicular to the axis (A) and extends radially inward toward the axis (A); the end portion (16) is substantially perpendicular to the axis (A) and extends radially outward; the end portion (16) is substantially parallel to the axis (A).

11. Use of a seal assembly (1) according to any one of the preceding claims for closing in a fluid-tight manner a seat of a vehicle axle, the seat housing axle supporting bearings and containing a lubricating fluid.

12. Use according to claim 11, wherein the second sealing member (7), supported by the radially outer annular element (3), is positioned toward the inside of the seat closed by the seal assembly (1), i.e. on the side of a lubricating fluid contained inside said seat; and the first sealing member (6), supported by the radially inner annular element (2), is outside the seat closed by the seal assembly (1) and the first lip (21) is the outermost lip outside said seat.
